# FASCICULE DE BREVET EUROPEEN

(11) **EP 2 775 492 B1**
(45) Date de publication et mention de la délivrance du brevet: **23.05.2018**
(21) Numéro de dépôt: 14156775.0
(22) Date de dépôt: 26.02.2014
(51) Int. Cl.: H01G 11/52, H01G 9/02, H01M 2/16, H01M 2/14, H01M 2/18

(54) **Elément capacitif comprenant un séparateur comprenant des protubérances interdisant son retrait**
Kapazitives Element, das einen Separator mit Protuberanzen umfasst, die sein Herausziehen verhindern
Capacitive element including a separator including projections preventing the removal thereof

(30) Priorité: 05.03.2013 FR 1351949
(43) Date de publication de la demande: 10.09.2014
(73) Titulaire: Blue Solutions, 29500 Ergué Gabéric (FR)
(72) Inventeur: Vigneras, Erwan, 29000 Quimper (FR)
(74) Mandataire: Regimbeau

(56) Documents cités:
- EP-A2- 2 086 044
- WO-A1-2007/080469
- FR-A1- 2 970 594
- GB-A- 2 031 300
- JP-A- 2012 209 072
- US-A1- 2006 141 350
- US-A1- 2010 129 720

## Description

L'invention concerne un ensemble de stockage d'énergie électrique, par exemple de type batterie ou supercapacité, et plus particulièrement l'élément capacitif d'un tel ensemble.

On connaît dans l'état de la technique des ensembles de stockage d'énergie comprenant au moins une première électrode, une deuxième électrode, les charges étant transmises par le biais d'un électrolyte dans lequel sont plongées les électrodes. Un séparateur isolant électriquement est également interposé entre les deux électrodes, pour éviter tout court-circuit entre les électrodes. L'élément capacitif est constitué en formant un empilement première électrode/ séparateur/ deuxième électrode/ séparateur qu'on enroule et qu'on insère dans une enveloppe comprenant un corps et au moins un couvercle, l'électrolyte étant également contenu dans cette enveloppe.

Le document JP 2012-209072 décrit un tel ensemble de stockage d'énergie électrique comprenant au moins deux électrodes entre lesquelles est interposé un séparateur électriquement isolant. Toutefois, ce séparateur est réalisé dans une matière plastique qui n'est pas poreuse.

Or dans ce type d'ensemble, on souhaite utiliser un séparateur réalisé en matière plastique poreuse, tel qu'en polypropylène poreux, qui présente des avantages en termes de coûts et d'isolation électrique et est notamment plus stable chimiquement que les séparateurs réalisés en papier, ce qui permet de limiter le vieillissement de l'ensemble de stockage.

Toutefois, utiliser ce type de séparateur peut présenter des inconvénients lors de la fabrication de l'ensemble de stockage. Des étapes de chauffage de l'enveloppe sont en effet généralement prévues, telles qu'une étape de polymérisation d'une colle pour relier le corps et le couvercle, et/ou une étape de soudage pour relier électriquement les électrodes à l'enveloppe et/ou une étape de traitement thermique de l'ensemble.

Durant ces étapes, la température du séparateur peut augmenter par conduction thermique. Or, ce séparateur étant poreux, il est susceptible de subir un retrait assez conséquent pour des températures correspondant à celles qu'il atteint lors des étapes sus-mentionnées du procédé. Il peut en résulter des zones aux extrémités des électrodes qui sont en contact direct et ainsi, en des courts-circuits se produisant dans l'ensemble de stockage.

Pour remédier à cela, on peut augmenter la longueur du séparateur placé dans l'élement capacitif mais cela augmente la quantité de matière et les coûts de fabrication de l'élément ainsi que son encombrement.

L'invention a pour but de remédier aux inconvénients de l'état de la technique et de permettre l'utilisation d'un séparateur en matière plastique dans un ensemble de stockage d'énergie, en s'affranchissant des inconvénients précités.

A cet effet, l'invention a pour objet un élément capacitif comprenant au moins deux complexes, chaque complexe comprenant au moins une électrode, les complexes étant superposés, un séparateur isolant électriquement, réalisé en matière plastique, étant interposé entre chaque paire de complexes, le ou au moins l'un des séparateurs comprenant au moins deux protubérances, au moins une protubérance étant située au voisinage d'une extrémité du séparateur selon une direction normale à la direction de superposition, les protubérances étant chacune formées par un ou plusieurs amas de la matière plastique du séparateur refondue.

Conformément à l'invention, le séparateur est réalisé en une matière plastique poreuse et au moins l'une des protubérances s'étend essentiellement sur toute une dimension du séparateur.

On notera qu'un séparateur comprenant au moins une protubérance située au voisinage de l'une de ses extrémités peut comporter la seconde protubérance en une zone distante de son extrémité. On considère qu'une zone est « au voisinage » d'une extrémité si la distance entre la zone et l'extrémité est inférieure ou égale à 25% de la dimension totale du séparateur selon cette direction, que ce soit sur l'extérieur ou sur l'intérieur du complexe.

Les protubérances selon l'invention assurent un verrouillage mécanique du séparateur entre les complexes pressés l'un contre l'autre. Elles permettent donc d'éviter d'une part un glissement des feuilles de séparateur susceptible de découvrir l'une des électrodes lors du fonctionnement de l'élément et d'autre part de limiter le retrait du séparateur lorsque celui-ci est exposé à des températures élevées, atteintes notamment au cours de l'une ou plusieurs des étapes précitées, la partie du séparateur située entre les protubérances (verrouillées mécaniquement) ne subissant pas de retrait. On peut donc éviter par ce biais que la longueur du séparateur ne diminue trop grandement et que les électrodes soient en contact direct à leurs extrémités.

On peut donc utiliser le séparateur dans l'élément capacitif sans avoir besoin de modifier le procédé de fabrication de l'ensemble et sans pour autant augmenter le risque de court-circuit ou la quantité de matière utilisée pour former le séparateur de façon significative. Ainsi, on optimise la fabrication de l'ensemble sans altérer ses propriétés et sa durée de vie.

En outre, le retrait étant empêché par un verrouillage mécanique du séparateur, on peut augmenter la porosité du séparateur sans se préoccuper du retrait éventuellement induit par cette porosité. On peut ainsi utiliser un séparateur ayant une porosité plus importante afin d'optimiser l'imprégnation de l'élément capacitif.

On notera qu'on utilise les propriétés du séparateur pour former la protubérance constituant la butée entre celui-ci et le complexe. Il n'est donc pas nécessaire d'apporter une pièce supplémentaire pour remplir cette fonction, ce qui rend l'élément capacitif simple à réaliser et peu coûteux.

On notera également que la porosité du séparateur est éliminée dans les zones dans lesquelles la matière est refondue. Mais cela n'empêche pas le bon fonctionnement du séparateur, la refonte étant locale et n'affecte pas le séparateur dans son intégralité.

Selon une autre caractéristique avantageuse de la présente invention, l'épaisseur de la protubérance est au moins égale à 1,2 fois l'épaisseur de la zone adjacente du séparateur exempte de protubérance, très préférentiellement supérieure à 1,5 fois l'épaisseur de la zone adjacente du séparateur exempte de protubérance.

Les directions selon lesquelles s'étendent les différentes protubérances sont de préférence essentiellement parallèles.

Les protubérances peuvent être ménagées dans la partie centrale du séparateur, prise en sandwich entre les complexes.

De préférence, au moins une des protubérances, notamment deux protubérances, est située à au moins une, notamment chacune des, extrémité(s) du séparateur selon au moins une direction prédéterminée normale à la direction d'empilement.

On peut alors empêcher complètement le retrait du séparateur.

Le séparateur est notamment de dimension supérieure aux électrodes selon ladite ou lesdites directions prédéterminées, de sorte que chaque protubérance dépasse des deux électrodes, selon cette ou ces directions. Le verrouillage mécanique est alors optimal.

On notera dans ce cas que, chaque protubérance ayant déjà été refondue, elle n'est plus poreuse. Ainsi, même si la matière poreuse du séparateur est susceptible de fondre lors des étapes telles que mentionnées ci-dessus ou même lors de l'utilisation normale de l'ensemble de stockage car elle n'est pas protégée par les complexes., la protubérance reste stable à ces températures, et ne fond pas à nouveau même si elle est plus exposée à la chaleur lorsqu'elle se trouve dans cette configuration.

De cette façon, même si l'une ou plusieurs des étapes telles que mentionnées précédemment sont effectuées et que le séparateur chauffe, une fois les protubérances formées, il ne subit pas de retrait, étant donné qu'il est retenu en place par coopération des protubérances et des bords des électrodes entre lesquelles il est interposé, à chacune de ses extrémités.

L'élément capacitif selon l'invention comprend également une ou plusieurs des caractéristiques de la liste suivante :
- la ou au moins l'une des protubérances est constituée par un amas de matière s'étendant continûment ou par une pluralité d'amas locaux (et espacés par des portions dépourvues d'amas). Dans ce dernier cas, les amas constituant les protubérances peuvent être en vis-à-vis ou en décalé ;
- la protubérance est agencée selon au moins deux directions, chacune étant normale à la direction de superposition.
- les protubérances forment notamment un cadre continu s'étendant en particulier sur le pourtour dudit ou d'au moins l'un desdits séparateurs. Cela est notamment avantageux lorsque l'élément capacitif est constitué d'électrodes empilées mais non bobinées (dit « stacké ») et que le séparateur a la forme d'un quadrilatère ;
- le séparateur peut à la fois comprendre des protubérances situées à ses extrémités et au moins une protubérance située en partie centrale éloignée de ses extrémités. Ainsi, on répartit les lieux au niveau desquels le séparateur s'oppose au retrait sur la longueur du séparateur, ce qui permet de répartir également les contraintes auxquelles est soumis le séparateur en cas de chauffe et de retrait. Ce mode de réalisation est particulièrement intéressant dans le cas de séparateur de grande longueur, pour lequel le retrait subi est susceptible d'être important,
- comme indiqué plus haut, les électrodes et le ou les séparateurs peuvent simplement être empilés (ou stackés) ou enroulés les uns sur les autres une fois empilés (on dit alors également qu'ils sont bobinés).
- au moins un complexe comprend, outre l'électrode, au moins un collecteur de courant métallique d'un seul tenant avec l'électrode. En particulier, au moins un complexe comporte d'un seul tenant deux électrodes et un collecteur de courant situé entre les deux électrodes. Toutefois, un complexe peut comprendre seulement une électrode et/ou une électrode associée à un collecteur. De préférence, le collecteur dépasse de l'électrode à au moins une extrémité de l'électrode selon la ou les directions prédéterminées;
- l'élément capacitif comprend un empilement d'une pluralité de complexes (notamment au moins trois) reliés électriquement en série. Il est particulièrement opportun de faire refondre les extrémités des séparateurs conformément à l'invention dans ce cas. En effet, le séparateur étant poreux et imprégné d'électrolyte, il est conducteur ionique. De plus, aux extrémités des séparateurs, dépassant des électrodes, la différence de potentiel correspond à la tension d'utilisation de l'ensemble de stockage. Cette combinaison de conduction ionique et différence de potentiel a pour effet de dégrader l'électrolyte et le séparateur et de diminuer la durée de vie de l'élément, notamment dans le cas où la différence de potentiel est importante, à savoir où l'élément capacitif comprend des complexes reliés en série. Or, les séparateurs refondus à leur extrémité selon l'invention ne sont plus poreux et ne contiennent donc plus d'électrolyte, évitant ainsi les inconvénients énoncés plus haut,
- le ou au moins l'un des séparateurs est interposé entre une électrode formant une anode de l'ensemble et une autre électrode formant cathode de l'ensemble,
- le ou au moins l'un des séparateurs est réalisé en polypropylène. Il pourrait également être réalisé en polyéthylène, notamment haute densité, en PTFE (polytétrafluoroéthylène), en PET (polyéthylène térephtalate), en PVDF (polyfluorure de vinylidène), en PPS (polysulfure de phénylène), en PEEK (polyéther éther kétone), ou composé de mélanges de ces polymères ou de l'un ou plusieurs de ces polymères avec un autre matériau, tel que du papier.
L'invention concerne également au moins un ensemble de stockage d'énergie comprenant au moins un élément capacitif selon l'invention. L'ensemble peut constituer une supercapacité - ou supercondensateur -. Il peut toutefois également être une batterie, un condensateur, etc.

L'invention a également pour objet un procédé de fabrication d'un élément capacitif comprenant les étapes suivantes :
- on superpose au moins un complexe, le complexe comprenant au moins une électrode, et au moins un séparateur isolant électriquement en matière plastique poreuse, le séparateur étant disposé de sorte qu'il présente au moins un pli,
- on chauffe localement ledit ou au moins l'un desdits séparateurs en au moins deux zones distinctes comprenant ce pli, situées au voisinage de ses extrémités selon une direction normale à la direction d'empilement, de sorte que la matière plastique fonde localement et constitue un ou plusieurs amas, le ou les amas de matière d'une même zone formant une protubérance.

Le procédé comprend une étape lors de laquelle on superpose au moins un séparateur et au moins deux complexes de sorte qu'un séparateur soit interposé entre chaque paire de complexes, cette étape d'interposition d'un séparateur entre deux complexes étant effectuée en fonction de la configuration choisie après l'étape de chauffage (cas des protubérances en partie centrale) ou avant l'étape de chauffage (cas des protubérances dépassant des électrodes).

Le fait de former un pli permet de faciliter la formation de la protubérance. Le séparateur peut être déposé sur le ou l'un des complexes de sorte que le pli soit formé dès l'étape de superposition (dans ce cas avant ou pendant l'étape de superposition). Alternativement, le séparateur peut être plié suite à l'étape de superposition.

De préférence, on dimensionne le séparateur de sorte que sa longueur selon la direction prédéterminée soit au moins 3% supérieure à la longueur de l'électrode du complexe, notamment entre 3 et 10% supérieure avant l'étape de chauffe. Cela permet de former une protubérance de taille suffisante, malgré le retrait subi par le séparateur durant l'étape de chauffage avant la formation de la protubérance, sans utiliser pour autant trop de matière.

Dans un mode de réalisation particulier de l'invention, on enroule également les complexes et le ou les séparateurs une fois ceux-ci empilés, pour former une bobine, cette étape d'enroulement étant effectuée avant ou après l'étape de chauffe.

Dans un autre mode de réalisation particulier de l'invention, on place les complexes et séparateurs empilés dans une enveloppe et on rapproche deux portions de bord de l'enveloppe à au moins une de ses extrémités et on relie ces portions de bord par thermo-scellage. On rapproche notamment les portions de bord avec interposition du ou d'au moins l'un des séparateurs et éventuellement de l'un ou plusieurs des collecteurs, l'étape de thermo-scellage correspondant à l'étape de chauffe dudit ou desdits séparateurs pour former les protubérances au voisinage de ces extrémités.

Bien évidemment, l'élément capacitif assemblé lors de ce procédé peut comprendre tout ou partie des caractéristiques listées ci-dessus.

On va maintenant décrire des exemples de réalisation de l'invention, non limitatifs de celle-ci et illustrés sur les figures présentées ci-dessous:
- la figure 1 représente une coupe d'un ensemble de stockage d'énergie dans lequel peut être mis en place un élément capacitif selon l'invention,
- la figure 2 représente une vue en coupe d'un autre ensemble de stockage d'énergie dans lequel peut être mis en place un élément capacitif selon l'invention,
- la figure 3 représente un détail en coupe d'un élément capacitif selon un mode de réalisation particulier de l'invention,
- les figures 4A à 4C représentent différentes étapes du procédé de fabrication de l'élément capacitif de la figure 3,
- la figure 5 représente un détail en coupe d'un élément capacitif selon un autre mode de réalisation particulier de l'invention,
- les figures 6A à 6E représentent différentes étapes du procédé de fabrication d'un ensemble de stockage d'énergie tel que celui de la figure 2, comprenant un élément capacitif tel que celui de la figure 5
- la figure 7 représente schématiquement une variante de réalisation conforme à la présente invention selon laquelle les protubérances forment un cadre continu qui s'étend sur le pourtour d'un séparateur.

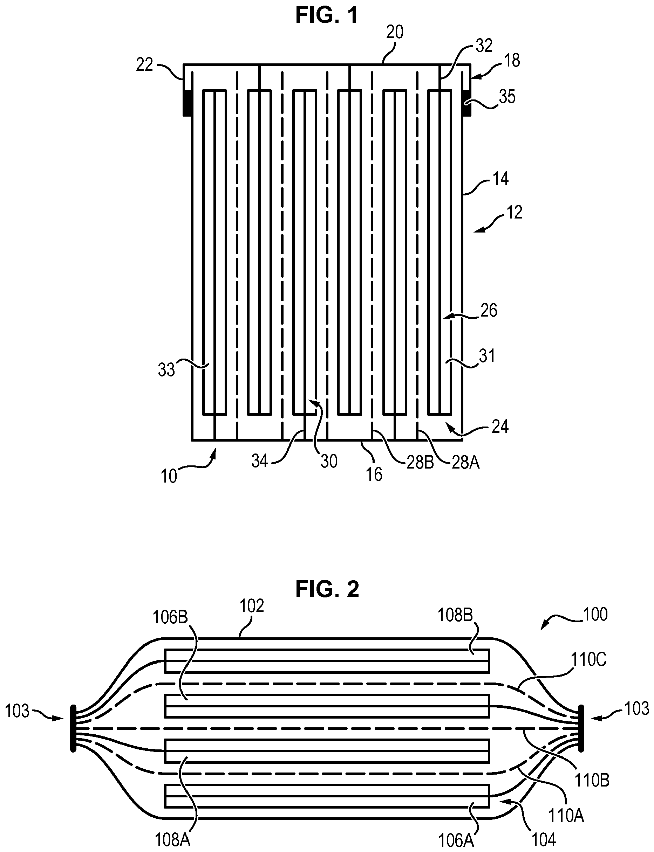

On a représenté sur la figure 1 un ensemble de stockage d'énergie 10 de type classique. Cet ensemble 10 comprend une enveloppe comportant un corps 12 cylindrique comprenant une paroi latérale 14 et un fond 16 formant une face d'extrémité de l'ensemble, ainsi qu'une ouverture à son extrémité opposée au fond 16. L'enveloppe comprend également un couvercle 18 comportant une face principale 20 recouvrant l'ouverture du corps 12 et formant l'autre face d'extrémité de l'ensemble et une jupe périphérique 22 destinée à longer la partie supérieure de la paroi latérale 14 de l'ensemble, à l'extérieur de celle-ci.

L'ensemble 10 comprend, à l'intérieur de l'enveloppe, un élément capacitif 24 composé d'un complexe d'électrode positive 26, de deux séparateurs 28A, 28B et d'un complexe d'électrode négative 30 superposés puis bobinés. L'empilement est effectué dans l'ordre suivant : complexe d'électrode positive 26, séparateur 28A, complexe d'électrode négative 30, séparateur 28B. Chaque complexe 26, 30 comprend en partie centrale un collecteur de courant 32, 34 et, sur chaque face du collecteur, une couche d'électrode 31, 33, respectivement positive pour le complexe 26 ou négative pour le complexe 30. Les électrodes positive et négative, également désignées respectivement cathode et anode, comprennent un charbon actif poreux permettant de stocker les charges. Les collecteurs de courant 32 ; 34, généralement réalisés en un matériau métallique, permettent de transmettre le courant ainsi créé vers l'extérieur de l'ensemble de stockage. Le séparateur, réalisé en un matériau isolant électriquement et poreux, permet d'isoler électriquement les deux électrodes (afin d'éviter les court-circuits) tout en laissant circuler les charges entre celles-ci. Pour les besoins de l'invention, le séparateur est réalisé en matière plastique poreuse, par exemple en polypropylène. On notera également qu'un électrolyte liquide est contenu dans l'enveloppe de l'ensemble. Cet électrolyte autorise la circulation des charges entre deux électrodes adjacentes.

Comme on le voit sur la figure 1, chaque complexe d'électrode d'un type particulier est relié à une face d'extrémité de l'ensemble de stockage. La liaison entre les collecteurs 32, 34 et l'enveloppe est notamment effectuée à l'aide d'une soudure. Les collecteurs 32 de l'électrode positive dépassent donc pour ce faire de l'empilement d'électrode à une première extrémité de l'empilement, selon une direction prédéterminée normale à la direction de superposition, tandis que les collecteurs 34 de l'électrode négative de l'empilement dépassent à une extrémité opposée, également selon la direction prédéterminée.

Le corps 12 et le couvercle 18 sont chacun réalisés en un matériau conducteur, notamment en métal, et forment les bornes respectives de l'ensemble. Le couvercle forme la borne positive alors que le corps forme la borne négative de l'ensemble. Le collecteur 32 associé aux électrodes positives est donc relié au couvercle 18 alors que le collecteur 34 associé aux électrodes négatives est relié au fond 16 de l'enveloppe. Pour éviter tout court-circuit, on notera que le corps et le couvercle sont isolés électriquement à l'aide d'un joint 35, placé entre la face intérieure de la jupe périphérique 22 et la face extérieure de la paroi latérale 14. Ce matériau permet également d'assurer l'étanchéité de l'ensemble et d'éviter toute fuite de l'électrolyte.

On va maintenant décrire à l'aide de la figure 2 un autre exemple d'ensemble de stockage d'énergie 100 selon l'invention.

Cet ensemble comprend une enveloppe 102 du type « coffee bag », bien connue dans le commerce, qui comprend un corps cylindrique ouvert à chacune de ces extrémités 103 mais refermé sur lui-même à chacune de ces extrémités pour former une enveloppe étanche.

A l'intérieur de l'enveloppe, est placé un élément capacitif 104 comprenant quatre complexes 106A, 106B ; 108A, 108B empilés avec interposition d'un séparateur 110A, 110B, 110C entre chaque paire de complexes adjacents. Chaque complexe positif 106A, 106B est placé à côté d'un complexe négatif 108A, 108B pour former une cellule capacitive élémentaire.

Comme dans le mode de réalisation précédent, chaque complexe 106, 108 est composé de deux électrodes entre lesquelles est placé un collecteur de courant métallique dépassant des électrodes selon une direction prédéterminée. Les collecteurs des complexes positifs 106A, 106B dépassent de l'électrode à une première extrémité de l'empilement selon la direction prédéterminée alors que les collecteurs des complexes négatifs 108A, 108B dépassent de l'électrode à une deuxième extrémité de l'empilement selon la direction prédéterminée.

Les séparateurs 110A-110C dépassent également de l'empilement aux deux extrémités de l'empilement selon la direction prédéterminée.

A chaque extrémité 103 de l'empilement, les collecteurs des complexes positifs 106A, 106B et les séparateurs 110A-110C à une première extrémité de l'empilement et les collecteurs des complexes négatifs 108A, 108B et les séparateurs à une deuxième extrémité de l'empilement sont thermo-scellés avec le bord de l'enveloppe à cette extrémité. Les collecteurs et séparateurs sont donc rassemblés pour être en contact à chaque extrémité 103 de l'empilement. On notera que les collecteurs et/ou les séparateurs ne sont pas forcément thermoscellés.

Chacun de ces types d'ensemble de stockage est relativement classique. On va maintenant s'intéresser au coeur de l'invention, à savoir l'empilement constituant l'élément capacitif contenu dans l'ensemble. On notera également que les ensembles décrits ci-dessus ne sont pas limitatifs de l'invention. Ceux-ci peuvent être de n'importe quelle configuration tant que l'ensemble contient un élément capacitif selon l'invention.

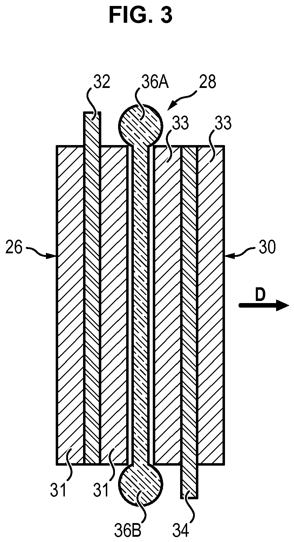

Dans le mode de réalisation représenté en coupe à la figure 3, on voit que le séparateur 28 comprend à chacune de ses extrémités selon la direction prédéterminée, normale à la direction de superposition D, une protubérance 36A, 36B. Cette protubérance est réalisée en refondant localement la matière plastique dont est constitué le séparateur. Elle est réalisée continûment sur tout le long de l'extrémité du séparateur. La protubérance s'étend donc perpendiculairement à la direction prédéterminée. Comme on le voit sur la figure 3, les protubérances 36A, 36B viennent en butée contre les extrémités des électrodes adjacentes entre lesquelles le séparateur est interposé, si l'on tente de modifier la position du séparateur selon la direction prédéterminée. Ainsi, lorsque le séparateur chauffe et a tendance à se rétreindre, ce retrait selon la direction prédéterminée est empêché par la butée des protubérances contre les électrodes.

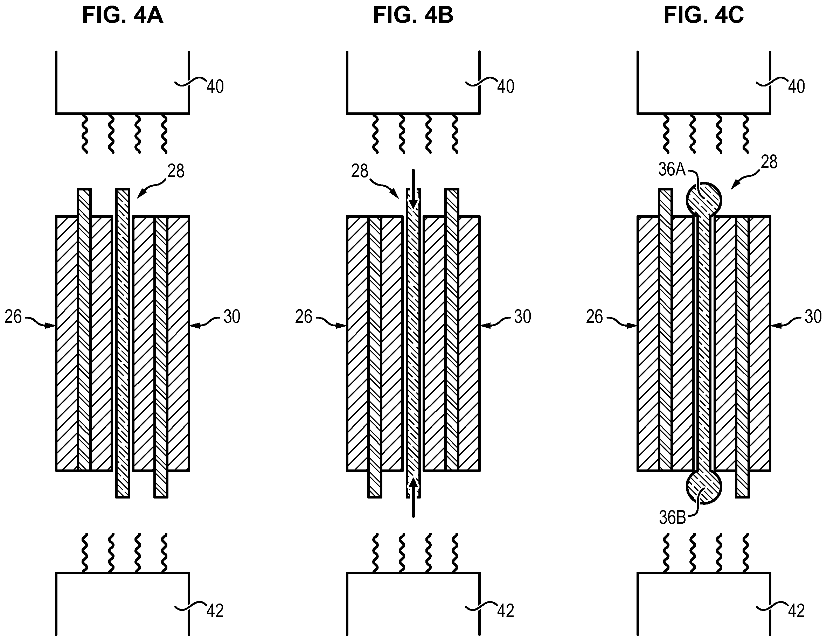

L'élément capacitif est alors réalisé de la façon suivante :
- on empile les différentes couches électrode positive 26 - séparateur 28 - électrode négative 30-séparateur 28, en les entraînant entre des cylindres permettant de constituer l'empilement. Le séparateur 28 est conçu de sorte que sa dimension transversale est supérieure à celle des couches d'électrodes 31, 33 (mais pas forcément à celle des collecteurs 32, 34) et qu'il dépasse de chaque côté de l'empilement selon la direction prédéterminée. On dimensionne le séparateur 28 de sorte que sa dimension transversale soit au moins 3%, de préférence de 5 à 10% supérieure à la dimension correspondante de l'électrode 31, 33. On positionne également son milieu selon la dimension transversale de sorte qu'il corresponde au milieu de l'électrode 26, 30 selon cette direction,
- suite à l'empilement, comme on le voit sur la figure 4A, on applique des éléments 40, 42, tels que des galets, chauffants à chaque extrémité de l'empilement selon la direction prédéterminée normale à la direction de superposition, les deux galets étant agencés pour être en contact avec les séparateurs 28.
- comme on le voit sur la figure 4B, le chauffage des extrémités du séparateur 28 entraîne tout d'abord un retrait du séparateur 28, mais le séparateur est dimensionné de sorte que, même après ce retrait, il soit de longueur supérieure ou égale à celle des électrodes,
- comme on le voit sur la figure 4C, le chauffage fait ensuite refondre chaque extrémité du séparateur 28 dépassant des électrodes 31, 33, afin de former une protubérance 36 telle que montrée sur la figure 4C. On notera que le reste du séparateur 28, protégé par l'électrode 26, 30 composée de charbon, qui a une température de fusion plus importante que le séparateur, protège la portion de séparateur située entre les électrodes et empêche cette portion de refondre, ce qui permet de conserver un séparateur 28 poreux fonctionnel entre les électrodes 31, 33,
- ensuite, dans le cas où l'empilement est placé dans un ensemble bobiné tel que celui de la figure 1, on découpe par exemple l'empilement à la dimension souhaitée (selon la direction transversale) et on enroule la portion obtenue, pour former une bobine.

Une fois l'élément capacitif 24 réalisé, on l'insère dans l'enveloppe, on le relie au corps 12 et au couvercle 18, on relie le couvercle 18 et le corps 12 et on imprègne l'ensemble en insérant l'électrolyte dans l'enveloppe. Ces étapes sont classiques et ne seront donc pas détaillées ici.

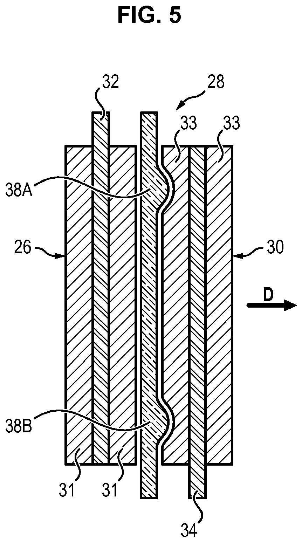

On va maintenant décrire un élément capacitif selon une variante de l'invention, représenté sur la figure 5. Les références sur cette figure sont les mêmes que sur la figure 3 pour les éléments qui sont identiques.

Dans cette variante, les complexes positif 26 et négatif 30 sont identiques à ceux de la figure 3 et ne seront pas détaillés. Le séparateur 28 comprend toutefois en remplacement des protubérances 36A, 36B, des protubérances 38A, 38B dans la portion du séparateur 28 situé entre les électrodes 31, 33. Ces protubérances 38A, 38B sont également réalisées en refondant la matière du séparateur 28 et sont donc non poreuses. Elles sont serrées entre les électrodes respectives 31, 33 des complexes positif 26 et négatif 30 et sont même susceptibles de déformer légèrement la surface de l'électrode 31, 33. Lorsque le séparateur 28 chauffe, ces protubérances 38A, 38B restent dans leurs positions initiales du fait du serrage exercé sur celles-ci par les électrodes 31, 33 et exercent un verrouillage empêchant le retrait du séparateur 28 dans sa partie centrale, située entre les protubérances 38A, 38B. Ces protubérances 38A, 38B s'étendent continûment sur toute la dimension du séparateur.

La présence de ces protubérances 38A, 38B (en regard des électrodes 31, 33 et de préférence au voisinage des extrémités de celles-ci) permet donc de limiter le retrait du séparateur 28. Elles peuvent également être utilisées en combinaison avec des protubérances telles que 36A, 36B (réalisées sur l'extérieur des extrémités des électrodes) afin de répartir les contraintes sur le séparateur 28 en cas de retrait. On notera également que la présence de ces protubérances 38A, 38B en regard des électrodes 31, 33, n'empêche pas la conduction ionique et l'échange d'ions entre deux électrodes 31, 33 en vis-à-vis puisque le séparateur 28 est seulement refondu localement. Les parties du séparateur ne comprenant pas de protubérance restent donc bien entendu poreuses.

Le mode de réalisation des protubérances à partir d'un pli conduit à des protubérances faisant saillie essentiellement sur une seule face des séparateurs. Selon des variantes conformes à l'invention, les plis et/ou les modalités de fusion de la matière peuvent être adaptés pour réaliser des protubérances en saillie sur les deux faces principales des séparateurs, au moins sensiblement symétriquement par rapport au plan moyen des séparateurs.

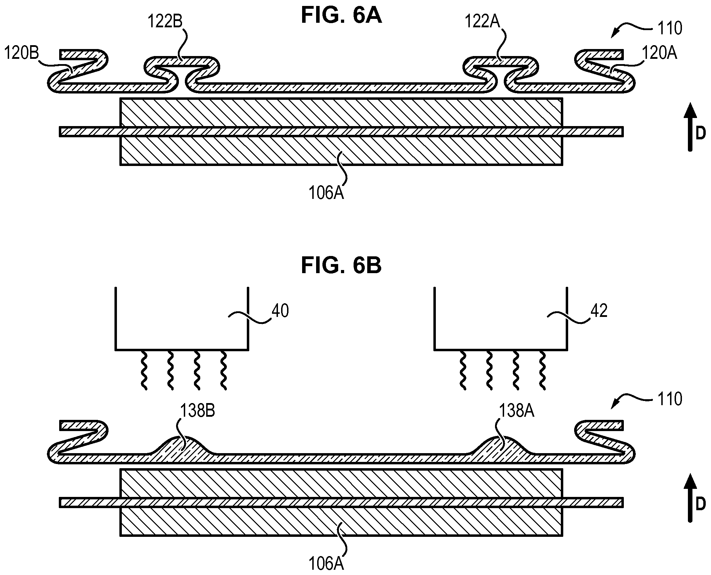

On va décrire à l'aide des figures 6A à 6E une autre variante d'un procédé d'assemblage d'un ensemble de stockage d'énergie, cet ensemble étant un ensemble tel que celui de la figure 2 dans lequel est placé un élément capacitif comprenant des protubérances extrêmes telles que celles de la figure 3 et des protubérances centrales.

Lors d'une première étape représentée sur la figure 6A, on empile un séparateur 110 sur un complexe 106A, le séparateur étant disposé sur le complexe 106A de sorte qu'il dépasse de l'électrode de chaque côté de celle-ci selon la direction prédéterminée et présente des plis 120A, 120B à ses extrémités et des plis 122A, 122B dans sa portion superposée à l'électrode. Au niveau de ces plis, le séparateur présente au moins deux couches superposées (en forme de Ω pour les plis 122A et 122B et en forme de S pour les plis 120A et 120B).

Lors d'une deuxième étape représentée sur la figure 6B, on chauffe le séparateur 110 au droit des plis 122A, 122B. Les galets 40, 42 sont appliqués au-dessus du séparateur 110 dans la direction de superposition D des différents éléments, de façon à chauffer localement celui-ci et à former une protubérance non poreuse 138A, 138B à la place des plis 122A, 122B. La présence des plis permet de faciliter la formation des protubérances en apportant un surplus local de matière. On notera qu'on chauffe l'électrode dans ce mode de réalisation mais que la température de fusion de celle-ci est supérieure à la température de fusion du séparateur.

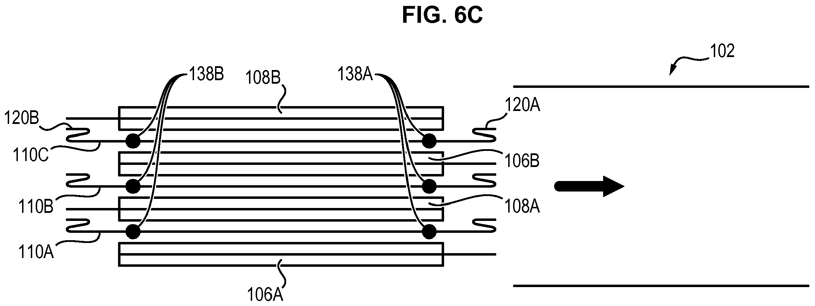

On empile ensuite un complexe négatif 108A au-dessus du séparateur 110A puis un autre séparateur 110B, qu'on chauffe, etc. jusqu'à former un empilement tel que représenté sur la figure 6C. On glisse ensuite cet empilement dans une enveloppe 102, ouverte à ses deux extrémités, comme cela est indiqué sur cette figure.

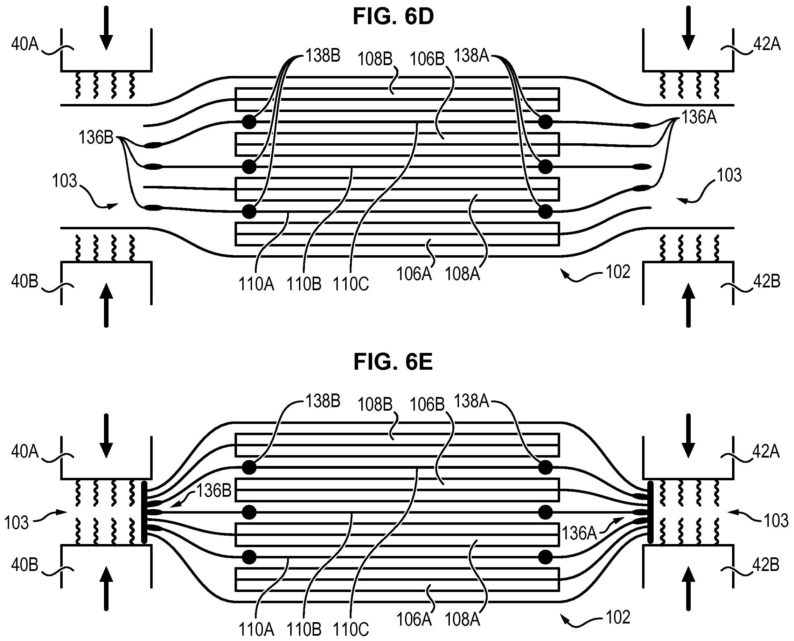

Ensuite, on referme les deux extrémités de l'enveloppe de sorte que les séparateurs 110A-110C et le collecteur d'un type de complexe (ie, soit positif, soit négatif) soit interposé entre les portions de bord de l'enveloppe 102 à l'une de ses extrémités. On compresse ainsi l'ensemble des séparateurs 110A, 110B, 110C, des collecteurs et du bord de l'enveloppe 102 en les chauffant. Les séparateurs 110A, 110B, 110C subissent un retrait à leurs extrémités (peu important vu que les protubérances 138A, 138B situées entre les électrodes maintiennent le séparateur en place sur une grande partie de sa longueur). Puis ils refondent localement à leurs extrémités pour former une protubérance respective 136A, 136B. On notera que l'enveloppe 102, réalisée en aluminium, et les électrodes 106, 108 ne fondent pas à la température de fusion des séparateurs 110A, 110B, 110C. Une fois ces séparateur 110A, 110B, 110C refondus, on augmente température et pression au niveau des extrémités 103 pour thermo-sceller les deux extrémités de l'enveloppe en compressant l'empilement des collecteurs et séparateurs les uns contre les autres et souder les différents éléments de l'empilement par ce biais. Ceci est réalisé à l'aide de paires de galets référencés 40A, 40B et 42A, 42B sur les figures 6 annexées.

Comme on l'a indiqué précédemment, selon une caractéristique avantageuse de la présente invention, l'épaisseur de la protubérance 36, 38, 136, 138 est au moins égale à 1,2 fois l'épaisseur de la zone adjacente du séparateur 28 exempte de protubérance, très préférentiellement supérieure à 1,5 fois l'épaisseur de la zone adjacente du séparateur exempte de protubérance, afin d'assurer l'effet de verrouillage mécanique précédemment décrit.

Par ailleurs l'épaisseur du séparateur 28 est généralement comprise entre 5 et 40 microns, avantageusement de l'ordre de 30 microns.

Bien entendu, l'invention n'est pas limitée aux modes de réalisations décrits ci-dessus.

Par exemple, l'élément capacitif peut être un élément stacké mais arrangé dans une enveloppe de type différent de ce qui a été décrit. Les séparateurs et/ou les collecteurs ne sont pas forcément reliés, ou pas forcément tous reliés, avec l'enveloppe à ses extrémités.

Les protubérances peuvent également être ménagées sur le séparateur sur des portions de celui-ci selon la direction prédéterminée, et non la totalité de sa dimension selon cette direction. Elles sont alors constituées par une pluralité d'amas séparés par des portions dépourvues d'amas.

La protubérance peut également être ménagée sur le séparateur selon plus d'une direction et pourrait par exemple être ménagée en zig-zag. Cela est notamment le cas lorsque le séparateur appartient à un élément capacitif stacké.

Comme indiqué précédemment, la protubérance peut être agencée selon au moins deux directions, chacune étant normale à la direction de superposition.

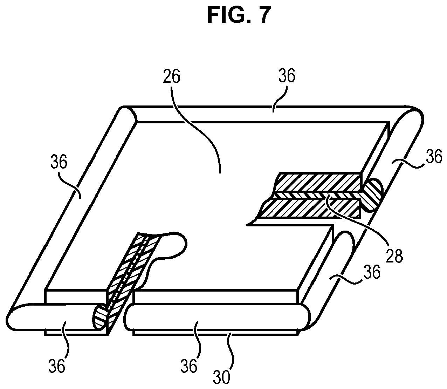

Selon un mode de réalisation schématisé sur la figure 7, les protubérances 36 forment un cadre continu qui s'étend sur tout le pourtour d'un séparateur.

On peut également prévoir, que le séparateur est plié de façon à entourer une électrode et comprend une protubérance au voisinage d'une extrémité retenue entre un premier et un deuxième complexe, et une protubérance au voisinage de l'autre extrémité retenue entre le deuxième et un troisième complexe.

On notera également que l'électrode peut ne pas être d'un seul tenant avec un collecteur ou qu'un complexe peut comprendre seulement un collecteur et une seule couche d'électrode.

De même, concernant le procédé, on peut prévoir que, dans le cas d'un ensemble bobiné, l'étape de bobinage soit effectuée avant l'étape de chauffe et de formation de la protubérance, ou que, dans le cas d'un ensemble stacké, le séparateur n'est pas scellé avec l'enveloppe ou ne comporte pas de plis par exemple.

Un séparateur placé dans un élément bobiné peut également comprendre des protubérances dans sa portion superposée avec l'électrode et/ou des plis pour la formation des protubérances. De même, dans un élément capacitif stacké, le séparateur peut être selon une configuration différente de celles décrites.

## Revendications

1. Elément capacitif (24; 104) comprenant au moins deux complexes (26, 30 ; 106A, 106B, 108A, 108B), chaque complexe comprenant au moins une électrode (31, 33), les complexes étant superposés, un séparateur (28A, 28B, 28) isolant électriquement, réalisé en matière plastique, étant interposé entre chaque paire de complexes, le ou au moins l'un des séparateurs comprenant au moins deux protubérances (36A, 36B ; 38A, 38B ; 136A, 136B, 138A, 138B), au moins une protubérance étant située au voisinage d'une extrémité du séparateur selon une direction normale à la direction de superposition, les protubérances étant chacune formées par un ou plusieurs amas de la matière plastique du séparateur refondue, ledit élément capacitif (24, 104) est **caractérisé en ce que** le séparateur (28A, 28B, 28) est réalisé en une matière plastique poreuse et **en ce qu'**au moins une des protubérances (36A, 36B, 38A, 38B ; 136A, 136B, 138A, 138B) s'étend essentiellement selon toute une dimension du séparateur.

2. Elément capacitif selon la revendication précédente, dans lequel au moins l'une des protubérances (36A, 36B ; 136A, 136B), notamment deux, s'étend à au moins une, notamment chacune, des extrémités du séparateur, selon au moins une direction prédéterminée, normale à la direction de superposition , le séparateur étant de dimension supérieure aux électrodes selon ladite ou lesdites directions prédéterminées, de sorte que ladite ou lesdites protubérances dépassent des deux électrodes selon ces directions.

3. Elément capacitif selon l'une quelconque des revendications précédentes, dans lequel au moins l'une des protubérances (38A, 38B ; 138A, 138B) est ménagée dans la portion du séparateur superposée à l'une au moins des électrodes.

4. Elément capacitif selon l'une quelconque des revendications précédentes, dans lequel le séparateur comprend en outre au moins une protubérance s'étendant dans une portion dite centrale du séparateur, éloignée de ses extrémités.

5. Elément capacitif selon l'une quelconque des revendications précédentes dans lequel au moins l'une des protubérances (36A, 36B) est agencée selon au moins deux directions, chacune étant normale à la direction de superposition.

6. Elément capacitif selon la revendication précédente, dans lequel au moins une partie des protubérances forment un cadre continu sur le pourtour dudit ou d'au moins l'un desdits séparateurs.

7. Elément capacitif selon l'une quelconque des revendications précédentes, dans lequel les complexes (26, 30) et le ou les séparateurs (28A, 28B) une fois empilés sont enroulés les uns sur les autres.

8. Elément capacitif selon l'une quelconque des revendications précédentes, comprenant au moins trois complexes (106A, 106B, 108A, 108B) empilés et reliés en série.

9. Elément capacitif selon l'une quelconque des revendications précédentes, dans lequel au moins un complexe (26, 30; 106A, 106B, 108A, 108B) comprend un collecteur de courant métallique (32, 34) d'un seul tenant avec l'électrode (31, 33).

10. Elément capacitif selon la revendication précédente, dans lequel ledit ou au moins l'un desdits complexes (26, 30; 106A, 106B, 108A, 108B) comporte d'un seul tenant deux électrodes (31, 33) et un collecteur de courant (32, 34) situé entre les deux électrodes du complexe.

11. Elément capacitif selon l'une quelconque des revendications précédentes, dans lequel le ou au moins l'un des séparateurs (28A, 28B, 28 ; 110A-110C) est réalisé au moins partiellement en polypropylène.

12. Elément capacitif selon l'une quelconque des revendications précédentes, dans lequel l'épaisseur de la protubérance (36A, 36B ; 38A, 38B ; 136A, 136B, 138A, 138B) est au moins égale à 1,2 fois l'épaisseur de la zone adjacente du séparateur (28A, 28B, 28) exempte de protubérance, très préférentiellement supérieure à 1,5 fois l'épaisseur de la zone adjacente du séparateur exempte de protubérance.

13. Ensemble de stockage d'énergie (10; 100), comprenant au moins un élément capacitif (24 ; 104) selon l'une des revendications précédentes.

14. Ensemble selon la revendication précédente, constituant une supercapacité.

15. Procédé de fabrication d'un élément capacitif (24 ; 104) selon l'une des revendications 1 à 12, **caractérisé en ce qu'**il comprend les étapes suivantes :
- on superpose au moins un complexe (26, 30; 106A, 106B, 108A, 108B) comprenant au moins une électrode (31,33), et au moins un séparateur (28, 28A, 28B ; 110A-110C) isolant électriquement en matière plastique poreuse, le séparateur étant disposé de sorte qu'il présente au moins un pli (120A, 120B ; 122A, 122B),
- on chauffe localement ledit ou au moins l'un desdits séparateurs (28, 28A, 28B ; 110A-110C) en au moins deux zones distinctes comprenant ce pli, situées au voisinage des extrémités du séparateur selon une direction normale à la direction de superposition, de sorte que la matière plastique fonde localement et constitue un ou plusieurs amas formant une protubérance (36A, 36B, 38A, 38B ; 136A, 136B, 138A, 138B), dans chacune des zones.

16. Procédé selon la revendication précédente, dans lequel on dimensionne le séparateur (28, 28A, 28B, 110A-110C) de sorte que sa longueur selon la direction prédéterminée soit au moins 3% supérieure à la longueur de l'électrode du complexe, notamment entre 3 et 10% supérieure avant l'étape de chauffage.

17. Procédé selon la revendication 15 ou 16, dans lequel on place les complexes (106A, 106B, 108A, 108B) et séparateurs (110A-110B) empilés dans une enveloppe (102) et on rapproche des portions de bords de l'enveloppe à au moins une de ses extrémités (103) avec interposition du ou d'au moins l'un des séparateurs et on relie ses bords par thermo-scellage, l'étape de thermo-scellage correspondant à l'étape de chauffage dudit ou desdits séparateurs pour former les protubérances au voisinage de ses extrémités.

## Patentansprüche

1. Kapazitives Element (24; 104), umfassend mindestens zwei Komplexe (26, 30; 106A, 106B, 108A, 108B), wobei jeder Komplex mindestens eine Elektrode (31, 33) umfasst, wobei die Komplexe übereinanderlagern, wobei ein elektrisch isolierender Separator (28A, 28B, 28) aus Kunststoffmaterial zwischen jedem Paar von Komplexen zwischengestellt ist, wobei der oder mindestens einer der Separatoren mindestens zwei Vorsprünge (36A, 36B; 38A, 38B; 136A, 136B, 138A, 138B) umfasst, wobei sich mindestens ein Vorsprung in der Nähe eines Endes des Separators gemäß einer zur Überlagerungsrichtung senkrechten Richtung befindet, wobei die Vorsprünge jeweils von einem oder mehreren Haufen des aufgeschmolzenen Kunststoffmaterials des Separators gebildet sind, wobei das kapazitive Element (24, 104) **dadurch gekennzeichnet ist, dass** der Separator (28A, 28B, 28) aus einem porösen Kunststoffmaterial hergestellt ist und dass sich mindestens einer der Vorsprünge (36A, 36B; 38A, 38B; 136A, 136B, 138A, 138B) wesentlich gemäß einer gesamten Dimension des Separator erstreckt.

2. Kapazitives Element nach vorangehendem Anspruch, wobei sich mindestens einer der Vorsprünge (36A, 36B; 136A, 136B), insbesondere zwei, an mindestens einem, insbesondere jedem, der Enden des Separators gemäß mindestens einer vorbestimmten, zur Überlagerungsrichtung senkrechten Richtung erstreckt, wobei der Separator gemäß der oder den vorbestimmten Richtungen derart größer als die Elektroden ist, dass der oder die Vorsprünge gemäß diesen Richtungen über die zwei Elektroden hinausragen.

3. Kapazitives Element nach einem der vorangehenden Ansprüche, wobei mindestens einer der Vorsprünge (38A, 38B; 138A, 138B) in dem Abschnitt des Separators ausgebildet ist, der mindestens eine der Elektroden überlagert.

4. Kapazitives Element nach einem der vorangehenden Ansprüche, wobei der Separator ferner mindestens einen Vorsprung umfasst, der sich in einem zentralen Abschnitt des Separators entfernt von seinen Enden erstreckt.

5. Kapazitives Element nach einem der vorangehenden Ansprüche, wobei mindestens einer der Vorsprünge (36A, 36B) gemäß mindestens zwei Richtungen ausgebildet ist, wobei jede zu der Überlagerungsrichtung senkrecht ist.

6. Kapazitives Element nach einem der vorangehenden Ansprüche, wobei mindestens ein Teil der Vorsprünge auf dem Umfang des oder mindestens einer der Separatoren einen kontinuierlichen Rahmen bilden.

7. Kapazitives Element nach einem der vorangehenden Ansprüche, wobei die Komplexe (26, 30) und der oder die Separatoren (28A, 28B) nach dem Stapeln aufeinander gewickelt werden.

8. Kapazitives Element nach einem der vorangehenden Ansprüche, umfassend mindestens drei gestapelte und in Reihe verbundene Komplexe (106A, 106B, 108A, 108B).

9. Kapazitives Element nach einem der vorangehenden Ansprüche, wobei mindestens ein Komplex (26, 30; 106A, 106B, 108A, 108B) einen mit der Elektrode (31, 33) einstückigen metallischen Stromsammler (32, 34) umfasst.

10. Kapazitives Element nach vorangehendem Anspruch, wobei der oder mindestens einer der Komplexe (26, 30; 106A, 106B, 108A, 108B) einstückig zwei Elektroden (31, 33) und einen Stromsammler (32, 34) aufweist, der sich zwischen den zwei Elektroden des Komplexes befindet.

11. Kapazitives Element nach einem der vorangehenden Ansprüche, wobei der oder mindestens einer der Separatoren (28A, 28B, 28; 110A-110C) mindestens teilweise aus Polypropylen hergestellt ist.

12. Kapazitives Element nach einem der vorangehenden Ansprüche, wobei die Stärke des Vorsprungs (36A, 36B; 38A, 38B; 136A, 136B, 138A, 138B) mindestens gleich dem 1,2-fachen der Stärke der benachbarten Zone des Separators (28A, 28B, 28), den Vorsprung ausgenommen, in sehr bevorzugter Weise größer als das 1,5-fache der Stärke der benachbarten Zone des Separators, den Vorsprung ausgenommen, beträgt.

13. Energiespeichereinheit (10; 100), umfassend mindestens ein kapazitives Element (24; 104) nach einem der vorangehenden Ansprüche.

14. Einheit nach vorangehendem Anspruch, die eine Superkapazität darstellt.

15. Verfahren zur Herstellung eines kapazitiven Elements (24; 104) nach einem der Ansprüche 1 bis 12, **dadurch gekennzeichnet, dass** es die folgenden Schritte umfasst:
- Übereinanderlagern von mindestens einem Komplex (26, 30; 106A, 106B, 108A, 108B), umfassend mindestens eine Elektrode (31, 33), und von mindestens einem elektrisch isolierenden Separator (28, 28A, 28B; 110A-110C) aus porösem Kunststoffmaterial, wobei der Separator derart angeordnet ist, dass er mindestens eine Falte (120A, 120B; 122A, 122B) aufweist,
- lokales Erwärmen des oder mindestens einer der Separatoren (28, 28A, 28B; 110A-110C) in mindestens zwei unterschiedlichen Zonen, die diese Falte umfassen, die sich in der Nähe der Enden des Separators gemäß einer zur Überlagerungsrichtung senkrechten Richtung befinden derart, dass das Kunststoffmaterial lokal schmilzt und einen oder mehrere Haufen darstellt, die einen Vorsprung (36A, 36B, 38A, 38B; 136A, 136B, 138A, 138B) in jeder der Zonen bilden.

16. Verfahren nach vorangehendem Anspruch, wobei der Separator (28, 28A, 28B, 110A-110C) derart dimensioniert wird, dass seine Länge gemäß der vorbestimmten Richtung mindestens 3 % länger als die Länge der Elektrode des Komplexes, insbesondere zwischen 3 und 10 % länger vor dem Schritt des Erwärmens, ist.

17. Verfahren nach Anspruch 15 oder 16, wobei die gestapelten Komplexe (106A, 106B, 108A, 108B) und Separatoren (110A-110B) in einen Mantel (102) platziert werden und Randabschnitte des Mantels mit Zwischenstellung des oder von mindestens einem der Separatoren an mindestens eines seiner Enden (103) angenähert werden und seine Ränder durch Heißsiegeln verbunden werden, wobei der Heißsiegelschritt dem Schritt des Erwärmens des oder der Separatoren entspricht, um die Vorsprünge in der Nähe seiner Enden zu bilden.

## Claims

1. A capacitive element (24; 104) comprising at least two complexes (26, 30; 106A, 106B, 108A, 108B), each complex comprising at least one electrode (31, 33), the complexes being superimposed, an electrically insulating separator (28A, 28B, 28) made of plastic material, being interposed between each pair of complexes, the or at least one of the separators comprising at least two protuberances (36A, 36B; 38A, 38B; 136A, 136B, 138A, 138B), at least one protuberance being located in the vicinity of one end of the separator in a direction normal to the superimposition direction, the protuberances being each formed by one or more clusters of the plastic material of the remelted separator, said capacitive element (24, 104) is **characterised in that** the separator (28A, 28B, 28) is made of porous plastic material and **in that** at least one of the protuberances (36A, 36B; 38A, 38B; 136A, 136B, 138A, 138B) extends essentially over an entire dimension of the separator.

2. The capacitive element according to the preceding claim, wherein at least one of the protuberances (36A, 36B; 136A, 136B), especially two, extends to at least one, especially each, of the ends of the separator, in at least one predetermined direction normal to the superimposition direction, the separator being of dimension greater than the electrodes in said predetermined direction(s), such that said protuberance(s) exceed both electrodes in these directions.

3. The capacitive element according to any one of the preceding claims, wherein at least one of the protuberances (38A, 38B; 138A, 138B) is provided in the portion of the separator superimposed on at least one of the electrodes.

4. The capacitive element according to any one of the preceding claims, wherein the separator further comprises at least one protuberance extending into a portion so-called central portion of the separator, away from its ends.

5. The capacitive element according to any one of the preceding claims, wherein at least one of the protuberances (36A, 36B) is arranged in at least two directions, each being normal to the superimposition direction.

6. The capacitive element according to the preceding claim, wherein at least part of the protuberances forms a continuous frame on the periphery of said or at least one of said separators.

7. The capacitive element according to any one of the preceding claims, wherein the complexes (26, 30) and the separator(s) (28A, 28B) once stacked are rolled up on each other.

8. The capacitive element according to any one of the preceding claims, comprising at least three complexes (106A, 106B, 108A, 108B) stacked and connected in series.

9. The capacitive element according to any one of the preceding claims, wherein at least one complex (26, 30; 106A, 106B, 108A, 108B) comprises a metal current collector (32, 34) as a single piece with the electrode (31, 33) .

10. The capacitive element according to the preceding claim, wherein said or at least one of said complexes (26, 30; 106A, 106B, 108A, 108B) includes as a single piece two electrodes (31, 33) and a current collector (32, 34) located between the two electrodes of the complex.

11. The capacitive element according to any one of the preceding claims, wherein the or at least one of the separators (28A, 28B, 28; 110A-110C) is made at least partially of polypropylene.

12. The capacitive element according to any one of the preceding claims, wherein the thickness of the protuberance (36A, 36B; 38A, 38B; 136A, 136B, 138A, 138B) is at least equal to 1.2 times the thickness of the area adjacent to the separator (28A, 28B, 28) having no protuberance, highly preferably greater than 1.5 times the thickness of the area adjacent to the separator having no protuberance.

13. An energy-storage assembly (10; 100), comprising at least one capacitive element (24; 104) according to one of the preceding claims.

14. The assembly according to the preceding claim, constituting a supercapacitor.

15. A method for manufacturing a capacitive element (24; 104) according to one of claims 1 to 12, **characterised in that** it comprises the following steps:
- at least one complex (26, 30; 106A, 106B, 108A, 108B) comprising at least one electrode (31,33), and at least one electrically insulating separator (28, 28A, 28B; 110A-110C) made of porous plastic material are superimposed, the separator being disposed so that it has at least a fold (120A, 120B; 122A, 122B),
- said or at least one of said separators (28, 28A, 28B; 110A-110C) is heated locally in at least two separate areas comprising this fold, located in the vicinity of the ends of the separator in a direction normal to the superimposition direction, such that the plastic material melts locally and constitutes one or more clusters forming a protuberance (36A, 36B, 38A, 38B; 136A, 136B, 138A, 138B), in each of the areas.

16. The method according to the preceding claim, wherein the separator (28, 28A, 28B, 110A-110C) is sized such that its length in the predetermined direction is at least 3% greater than the length of the electrode of the complex, especially between 3 and 10% greater prior to the heating step.

17. The method according to claim 15 or 16, wherein the stacked complexes (106A, 106B, 108A, 108B) and separators (110A-110B) are placed in an envelope (102) and edge portions of the envelope are brought together at least at one of its ends (103) with interposition of the or at least one of the separators and its edges are joined by heat-sealing, the heat-sealing step corresponding to the heating step of said separator(s) to form the protuberances in the vicinity of its ends.
